# EUROPÄISCHE PATENTSCHRIFT

(11) **EP 2 774 315 B1**
(45) Veröffentlichungstag und Bekanntmachung des Hinweises auf die Patenterteilung: **26.09.2018**
(21) Anmeldenummer: 12786874.3
(22) Anmeldetag: 30.10.2012
(51) Int. Cl.: H04L 12/10, H04L 12/40

(54) **EINHEIT MIT SCHALTFUNKTION FÜR ETHERNET**
UNIT HAVING A SWITCHING FUNCTION FOR ETHERNET
UNITÉ DOTÉE D'UNE FONCTION DE COMMUTATION POUR ETHERNET

(30) Priorität: 03.11.2011 DE 102011117589
(43) Veröffentlichungstag der Anmeldung: 10.09.2014
(73) Patentinhaber: KNORR-BREMSE Systeme für Schienenfahrzeuge GmbH, 80809 München (DE)
(72) Erfinder: KASTNER, Karl, 81477 München (DE); BRAUN, Achim, 82152 Planegg (DE); FURTWÄNGLER, Ralf, 80689 München (DE); RIEDIGER, Oliver, 81547 München (DE)
(86) Internationale Anmeldenummer: PCT/EP2012/071445
(87) Internationale Veröffentlichungsnummer: WO 2013/064480

(56) Entgegenhaltungen:
- WO-A2-2006/113858
- DE-A1- 10 242 921
- US-A1- 2009 003 373

## Beschreibung

Die Erfindung betrifft eine Einheit mit Schaltfunktion für Ethernet, und bezieht sich insbesondere auf eine mehrere aktive Komponenten mit Schaltfunktion beinhaltende Einheit für ein auf Ethernet beruhendes und hoch verfügbares Netzwerk mit langer räumlicher Ausdehnung.

Ein industrielles Ethernet, das auch als Echtzeit-Ethernet bezeichnet wird, ist ein Oberbegriff für Bestrebungen, den Ethernet-Standard für die Vernetzung von Geräten, die im industriellen Umfeld, etwa in der industriellen Fertigung eingesetzt werden, nutzbar zu machen.

In einem solchen Umfeld ist allgemein eine Vielzahl von miteinander kommunizierenden und Daten austauschenden Geräten miteinander zu vernetzen. Insbesondere müssen dabei in der Regel Steuergeräte miteinander verbunden werden, an welche wiederum Endgeräte bzw. Kommunikationsteilnehmer anschließbar sind. Häufig werden dazu Netzwerkgeräte mit Steuerfunktion (Steuergerät) in einer Ringtopologie zusammengeschlossen, und sind Endgeräte bzw. Kommunikationsteilnehmer wiederum mit einem jeweiligen Steuergerät verbunden.

Im Falle einer Ringtopologie ergibt sich Redundanz bereits aus deren grundlegender Funktionsweise, wonach sich - vereinfacht ausgedrückt - ein Paket bzw. ein so genannter Frame oder Token entlang des Rings fortbewegt und zunächst an jedem Knoten des Rings stoppt. Falls ein Knoten Daten übertragen möchte, fügt er dem Paket eine Zieladresse eines Zielknotens und Daten hinzu. Das Paket umläuft sodann weiter den Ring auf der Suche nach dem Zielknoten. Wird er gefunden, werden die entsprechenden Daten aus dem Paket heraus übergeben, und setzt sich der Umlaufzyklus wie beschrieben fort.

Bei einer einfachen Unterbrechung des Rings, beispielsweise durch einen Fehler in der Verkabelung, kann das Paket den Ring auch in der entgegengesetzten Richtung durchlaufen und damit noch immer alle Ringknoten erreichen. Eine Doppelringstruktur sichert dazu weiter ab, indem wenigstens ein Teil des Doppelrings als Überbrückung eines unterbrochenen Abschnitts des Einfachrings genutzt werden kann, oder jeder der Ringe des Doppelrings eine Unterbrechung aufweisen kann, ohne dass das Netzwerk insgesamt unterbrochen wird.
Wesentliches Augenmerk liegt in einem solchen Netzwerk auf der mit ihm zu erzielenden Verfügbarkeit. Ein steigender Komplexitätsgrad mit immer zahlreicheren miteinander zu vernetzenden Komponenten erfordert zudem eine immer höhere Bandbreite und/oder Bitrate.
Hersteller von Steuergeräten für räumlich verteilte Anlagen oder koppelbare Fahrzeuge, beispielsweise Hersteller von Schienenfahrzeugen oder Systemen für Schienenfahrzeuge, stoßen bei einer zunehmenden Anzahl von zu vernetzenden Geräten bzw. Steuergeräten und/oder länger werdenden Kabellängen an Grenzen bisher verwendeter Bussysteme, die sich in beispielsweise nicht mehr ausreichender Bandbreite für einzelne Netzwerkteilnehmer und/oder der Erzielung einer geforderten hohen Verfügbarkeit des Netzwerks manifestieren.

Das Dokument DE10242921 beschreibt eine redundante Leistungsversorgung einer aktiven Komponente, die in einem Ethernet-Stecker untergebracht ist. Die redundante Leistungsversorgung wird unidirektional betrieben.

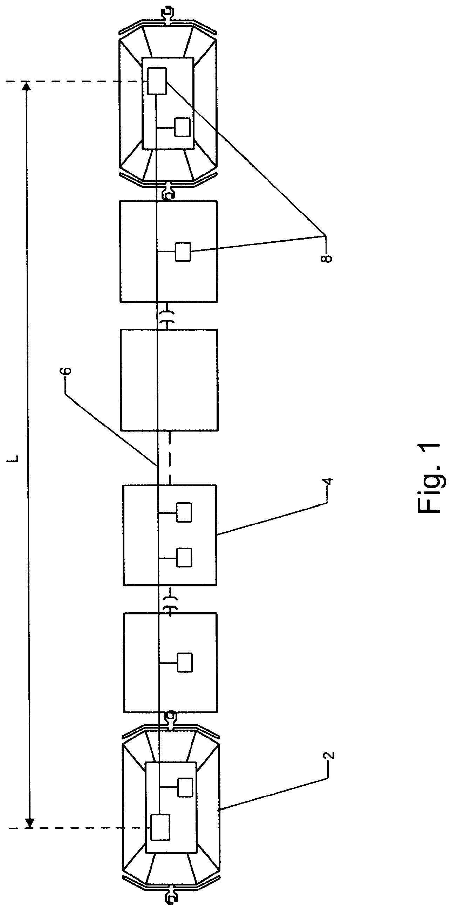

Fig. 1 zeigt vereinfacht einen beispielhaften Verbund von Schienenfahrzeugen, der auch als Consist bezeichnet wird, mit jeweils einem Antriebsfahrzeug 2, beispielsweise einer Lokomotive, an beiden Enden und einer Anzahl von Wagen oder Waggons 4 zwischen den Antriebsfahrzeugen 2. Durch den gesamten gekoppelten Schienenfahrzeugverbund verläuft eine Bus- oder Netzwerkstruktur 6 einer Kabellänge L mit Teilnehmern 8, beispielsweise wenigstens einem Steuergerät in wenigstens einem der Antriebsfahrzeuge 2 und wenigstens einem anderweitigen Netzwerkteilnehmer, beispielsweise einem weiteren Steuergerät, einem Kommunikationsteilnehmer und/oder einem Endgerät, in wenigstens einem der Wagen 4.
Die Bandbreitenproblematik bisheriger Vernetzungsformen, die in der Regel auf Busstrukturen wie etwa CAN beruhen, resultiert vereinfacht ausgedrückt in einer im Kollisionsfall üblicherweise notwendigen Berücksichtigung von Laufzeiten auf dem Bus. Denn erst nach Verstreichen der Laufzeit kann an einer Beurteilungseinrichtung, etwa einer Stelle mit Masterfunktionalität oder Mitteln zur Arbitrierung bzw. Kollisionsauflösung, über eine Funktion oder eine Nichtfunktion beispielsweise eines Netzwerkabschnitts oder Netzwerkgeräts entschieden werden. Wird der Bus aufgrund größerer Vernetzungslängen länger, zum Beispiel bedingt durch einen wegen einer größeren Anzahl von Netzwerkgeräten zu versorgenden größeren Bereich und/oder durch eine größer werdende Kabel- oder Vernetzungslänge, wie sie beispielsweise bei einem Schienenfahrzeugverbund durch Koppeln einzelner Wagen zu langen Zügen auftreten kann, sinkt die zur Verfügung stehende Datenrate bzw. Bitrate aufgrund der länger werdenden Laufzeiten ab. Eine zunehmende Anzahl von Netzwerkteilnehmern, die zusätzlich Datenrate generieren, verstärkt die Abnahme der einem Netzwerkteilnehmer zur Verfügung stehenden Datenrate weiter.

Nach Fig. 1 kann unter der Annahme einer Länge der Wagen 4 von 25 m und beispielsweise 16 gekoppelten Fahrzeugen, d. h. einer Zuglänge von etwa 400 m, die Kabellänge L der Bus- oder Netzwerkstruktur einschließlich Verlegezugaben, bedingt durch etwa geeignete oder erforderliche Leitungsführungen oder Sicherheitsfaktoren, durch den gesamten Schienenfahrzeugverbund ohne weiteres 800 m erreichen.

Bisherige Bussysteme und Netzwerktechnologien, wie beispielsweise CAN (Controller Area Network), Profibus, MVB (Multifunction Vehicle Bus) und dergleichen, können bei derartigen Kabellängen die benötigte Bandbreite nicht mehr gewährleisten und müssen daher gegebenenfalls segmentiert und mit einer zusätzlichen Hierarchie zur Verbindung der Segmente ausgestaltet werden. Zwar kann dadurch die notwendige Datenrate gegebenenfalls gehalten werden. Es sinkt aber aufgrund des zusätzlichen Aufwands und der damit wiederum verbundenen höheren Ausfallwahrscheinlichkeiten die Verfügbarkeit des Netzwerks unerwünscht ab.

Ethernet-basierte Vernetzungen mit ihrer weiten Verbreitung und preiswerten Verfügbarkeit eignen sich dagegen aus Sicht der grundsätzlich möglichen Datenrate, bieten zudem eine verbesserte Funktionalität, und sind darüber hinaus kostengünstig zu realisieren.

Echtzeit-Fähigkeit ist in einem solchen Ethernet vermittels eines so genannten geschalteten oder industriellen Ethernets bzw. Switched Ethernet erzielbar. Zur Vermeidung von Kollisionen sind dabei alle Netzwerkkomponenten Punkt-zu-Punkt verbunden.

Ethernet unterliegt jedoch einer generellen Beschränkung auf jeweils 100 m Kabellänge als maximal möglichem Abstand von Komponenten und ist damit als Bussystem nur bedingt geeignet. Netzwerke mit Kabellängen von mehr als 100 m müssen in der Regel mittels zwischengeschalteten elektronischen Umschaltgeräten zur Verbindung mehrerer Netzwerkteilnehmer oder Netzwerksegmente in einem lokalen Netzwerk, so genannten Switches bzw. Switching Hubs, mit aktiven (Schalt- bzw. Umschalt-) Komponenten mit Schaltfunktion, aufgebaut werden. Als Nachteil von Ethernet gegenüber einem klassischen Bussystem ohne aktive Komponenten unterbricht der Ausfall einer aktiven Komponente aber die Kommunikationsverbindung. Aktive Komponenten wie Switches und dergleichen sowie deren grundlegende Funktionsweise sind hinreichend bekannt, so dass an dieser Stelle nicht weiter darauf eingegangen wird.

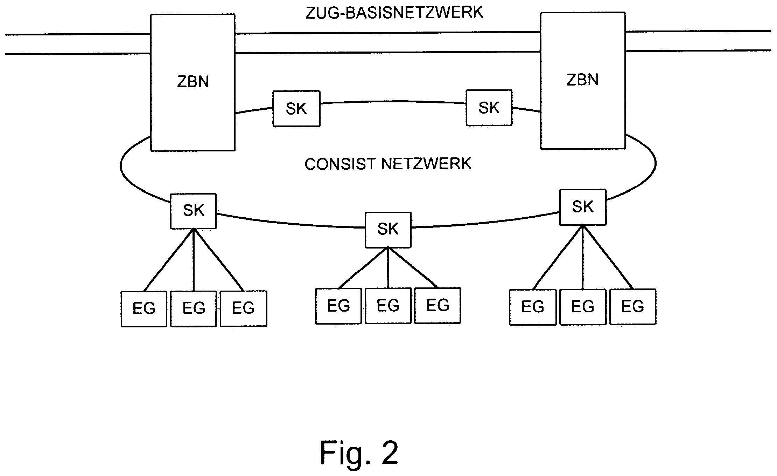

Fig. 2 zeigt vereinfacht eine grundlegende Ethernet-Beispieltopologie zur Anwendung bei Schienenfahrzeugen, etwa in Zügen. Dabei verläuft allgemein ein so genanntes Zug-Basisnetzwerk ZBN durch den Schienenfahrzeugverbund. Eine Ringleitung ist mit dem Zug-Basisnetzwerk ZBN gekoppelt und enthält eine Anzahl von aktiven Komponenten SK. An den einzelnen aktiven Komponenten SK sind wiederum eine Anzahl von Endgeräten, etwa Komponenten, Bremsen, Türen, eine Klimaanlage, WC-Einrichtungen, Oberleitungsstromabnehmern und dergleichen, beispielsweise in Sterntopologie angeschlossen.

Soll nun ein Ethernet-basiertes Netzwerk in beispielsweise einem Eisenbahnzug, d. h. einem Verbund oder Consist aus mehreren miteinander gekoppelten Schienenfahrzeugen, bisherige Bussysteme bzw. Netzwerktechnologien ersetzen, ist davon auszugehen, dass jeder Wagen eines Schienenfahrzeugverbunds so aufgebaut ist, dass er an jeder beliebigen Position in dem Verbund einkoppelbar ist (d. h. nicht bereits aufgrund begrenzter Kabellängen darauf geachtet werden muss, an welcher Stelle in einem Verbund ein Wagen eingekoppelt werden kann oder muss, damit ein steuerbares Gesamtsystem entsteht). Daher befinden sich zum Beispiel in jedem - dann "autarken" - Wagen eines Verbunds jeweils zumindest eine aktive (Switch-) Komponente und zumindest ein Kommunikationsteilnehmer, die die jeweiligen (Teil-) Anlagen und Systeme, beispielsweise Bremssysteme, Klimaanlagen, Kommunikations- und Anzeige- oder Unterhaltungssysteme und dergleichen, des entsprechenden Wagens versorgen und steuern. In anderen Worten wird so gewährleistet, dass die bei einem Ethernet-basierten Netzwerk maximale Segmentkabellänge von 100 m in einer beliebigen Zusammenstellung einzelner Wagen eines Schienenfahrzeugverbunds nicht überschritten wird. Es wird angemerkt, dass auch Wagen ohne Kommunikationsteilnehmer vorhanden sein können. In diesem Fall kann die aktive Komponente als so genannter Repeater arbeiten.

Allerdings können im Betrieb eines Schienenfahrzeugverbunds Betriebssituationen auftreten, in welchen die Leistungsversorgung der einzelnen Wagen zumindest kurzzeitig nicht gewährleistet werden kann. Solche Betriebssituationen sind etwa auftretende Unterbrechungen oder Kontaktstörungen an zwischen zwei Wagen über Steckverbinder oder Kupplungen geführten Versorgungsleitungen, oder Störungen der Stromabnahme von Oberleitungen. In solchen Fällen kann die gesamte Leistungsversorgung einschließlich der aktiven Komponenten eines Wagens und damit auch die Steuerung dessen Systeme, beispielsweise der Betriebsbremse, zumindest kurzzeitig gestört sein oder gar länger dauernd zusammenbrechen.

Insbesondere bei Netzwerken für empfindliche Anlagen und Systeme mit sicherheitskritischen Funktionen, wie beispielsweise Bremsen und Türen bei Schienenfahrzeugen, ist dies nicht tolerierbar, und wird daher eine hohe Verfügbarkeit gefordert.

Ein Ansatz, kostengünstig zumindest die am Ethernet teilnehmenden Geräte und Einrichtungen mit Energie bzw. Leistung zu versorgen, ist eine als Power over Ethernet (PoE) bezeichnete Technik, bei welcher die (Signal-) Leitungen des Ethernets auch eine Betriebsspannung für angeschlossene Ethernet-Geräte führen und Leistung an diese liefern können. Üblicherweise werden dabei Ethernet-Endgeräte von einer aktiven Komponente mit unidirektionaler Speiserichtung (d. h. von der aktiven Komponente hin zum Endgerät) versorgt. Power over Ethernet an sich ist im Sprachgebrauch eingeführt, standardisiert und ebenfalls bekannt, so dass hier nicht näher darauf eingegangen wird.

Aufgrund der Unidirektionalität von Power over Ethernet, wie vorstehend erwähnt von einer aktiven Komponente zu einem Endgerät ohne anderweitig eigenen bzw. lokalen Versorgungsanschluss, und des üblichen Vorteils des bei Nutzung von Power over Ethernet Entfalls einer Eigenleistungsversorgung am Endgerät selbst, stellt Power over Ethernet allein noch keine geeignete Maßnahme dar, eine ausfallsichere Versorgung der aktiven Komponenten bzw. deren Schaltfunktion zu gewährleisten.

Der Erfindung liegt daher als eine Aufgabe zugrunde, kostengünstig eine Einheit mit Schaltfunktion für ein hoch verfügbares Ethernet-basiertes Netzwerk mit verbesserter Ausfallsicherheit und gleichzeitig hoher Bandbreite bei langer Ausdehnung des Netzwerks zu schaffen.

Darüber hinaus soll die Erfindung allgemein in verteilten Netzwerken von industriellen Anlagen sowie auch in Verbänden von gekoppelten Fahrzeugen, wie beispielsweise einem Verbund von Schienenfahrzeugen, einsetzbar sein.

Erfindungsgemäß wird diese Aufgabe durch die Merkmale des Patentanspruchs 1 gelöst. Vorteilhafte Weiterbildungen der Erfindung sind Gegenstand der beigefügten Unteransprüche.

Der Erfindung liegt der allgemeine Gedanke zugrunde, jeweils innerhalb der maximal zulässigen Kabellänge von Ethernet-Netzwerksegmenten wechselseitig versorgte aktive Komponenten mit Schaltfunktion vorzusehen. Eine Anzahl solcher aktiven Komponenten wird zu einer funktionellen Einheit mit Schaltfunktion bzw. Schaltfunktionseinheit vereint. Jede solche Einheit wird von drei voneinander unabhängigen Leistungsquellen versorgt, wobei die drei unabhängigen Leistungsquellen jeweils die aktiven Komponenten der Einheit im erforderlichen Umfang bedienen. Bei den drei unabhängigen Leistungsquellen handelt es sich um jeweils eine lokale Leistungsversorgung bzw. Eigenleistungsversorgung der jeweiligen Einheit, um eine erste unidirektionale Power over Ethernet-Versorgung (von einer ersten benachbarten Einheit) über eine Signalleitung aus einer ersten Richtung des Ethernets, und um eine zweite undirektionale Power over Ethernet-Versorgung (von einer zweiten benachbarten Einheit) über eine Signalleitung aus einer zweiten Richtung des Ethernets. In anderen Worten verfügt eine Schaltfunktionseinheit, und damit auch deren aktive Komponenten, jeweils über eine lokale Leistungsversorgung, und kann zusätzlich aus zwei verschiedenen Richtungen jeweils unidirektional und damit über eine insgesamt wechselseitige, bidirektionale Versorgung über Power over Ethernet gespeist werden. Selbst wenn bis zu zwei Leistungsversorgungen einer Schaltfunktionseinheit ausfallen, gehen deren innere aktive Komponenten dadurch noch nicht außer Betrieb, und besteht somit noch keine Kommunikationseinschränkung auf dem Ethernet. Die Verfügbarkeit des Ethernets wird somit wesentlich verbessert und erhöht.

Gemäß diesem allgemeinen Gedanken ist die Erfindung in beliebigen industriellen Ethernet-Netzwerken mit großer bzw. langer räumlicher Ausdehnung nutzbar, bei welchen hohe Bandbreite und hohe Verfügbarkeit gefordert wird.

Grundlegende Vorteile der Erfindung bestehen dabei in möglicher großer räumlicher Ausdehnung, gleichzeitig hoher Bandbreite, gegenüber bekannten Topologien geringen Kosten, reduziertem Verkabelungsaufwand aufgrund der Darstellung einer redundanten Leistungsversorgung über Signalleitungen, und einer kleinstmöglichen Anzahl von Netzwerkkomponenten.

Die Aufgabe wird somit gelöst durch eine Einheit mit Schaltfunktion oder Anordnung für eine Schaltfunktionseinheit für Ethernet, gekennzeichnet durch eine Anzahl aktiver Komponenten des Ethernet, die mittels der Schaltfunktionseinheit zu einer funktionellen Einheit zusammengefasst werden; und zumindest drei voneinander unabhängige Leistungsversorgungen zur Leistungsversorgung der aktiven Komponenten, wobei eine erste der zumindest drei Leistungsversorgungen als eine lokale Leistungsversorgung der Schaltfunktionseinheit ausgebildet ist, eine zweite der zumindest drei Leistungsversorgungen als eine erste Fremdleistungsversorgung über Ethernet der Schaltfunktionseinheit ausgebildet ist, und eine dritte der zumindest drei Leistungsversorgungen als eine zweite Fremdleistungsversorgung über Ethernet der Schaltfunktionseinheit ausgebildet ist.

Bevorzugt weist die Schaltfunktionseinheit als Anschlüsse zumindest vier Ethernet-Ports auf, von welchen wenigstens zwei Power over Ethernet als die Fremdleistung nach außerhalb der Schaltfunktionseinheit liefern können, und von welchen wenigstens zwei Power over Ethernet als die Fremdleistung von außerhalb der Schaltfunktionseinheit empfangen können.

Dadurch wird vorteilhaft die Schaltfunktionseinheit in einem Normalbetrieb von der lokalen Leistungsversorgung mit Leistung versorgt, und in einem Fehlerfall der lokalen Leistungsversorgung von zumindest einer der ersten und der zweiten Fremdleistungsversorgung mit Power over Ethernet versorgt.

Hierdurch stehen dann, wenn die lokale Haupt- oder Eigenleistungsversorgung der Schaltfunktionseinheit, die über beispielsweise eine Oberleitung erfolgt, eine Störung aufweist und die für den Betrieb der Ethernet-Komponenten und deren Kommunikation notwendige Leistung nicht liefern kann, vorteilhaft alternative Leistungsversorgungen zur Verfügung, mit deren Energie zumindest die Kommunikation auf dem Ethernet auch im Störungsfall aufrecht erhalten werden kann.

Dabei kann die Schaltfunktionseinheit über eine erste Ethernet-Leitung von einer ersten aktiven Komponente einer ersten benachbarten Schaltfunktionseinheit mit Power over Ethernet versorgt werden; kann die Schaltfunktionseinheit über eine zweite Ethernet-Leitung von einer zweiten aktiven Komponente einer zweiten benachbarten Schaltfunktionseinheit mit Power over Ethernet versorgt werden; und kann die Leistungsversorgung durch die erste und zweite aktive Komponente der benachbarten ersten und zweiten Schaltfunktionseinheit für alle aktiven Komponenten der Schaltfunktionseinheit bereitgestellt werden.

Die erste und die zweite Fremdleistungsversorgung bilden somit über Ethernet an der Schaltfunktionseinheit eine wechselseitige, bidirektionale Leistungsversorgung der Schaltfunktionseinheit mittels Power over Ethernet über Signalleitungen des Ethernets.

Dadurch wird äußerst vorteilhaft eine richtungsunabhängige, wechselseitig bidirektionale Leistungsversorgung über ohnehin vorhandene Ethernet-Verkabelung für eine gesamte Schaltfunktionseinheit mitsamt den darin zusammengefassten Schaltkomponenten sowie für die von diesen versorgten Endgeräten bereitgestellt.

Bevorzugt wird bei einer vorzugsweise in Kabelkanälen und als Kabelstränge geführten Verkabelung, wenn wenigstens ein Teil der Anzahl der aktiven Komponenten der Schaltfunktionseinheit in einem gemeinsamen Gehäuse der Schaltfunktionseinheit aufgenommen ist.

Hierdurch werden die übrigen Vorteile mit geringstmöglichem Aufwand und Materialeinsatz sowie bestmöglicher Kostengestaltung erzielt.

Bei besonderen räumlichen Bedingungen oder beispielsweise für eine Nachrüstung bestehender Verkabelungen, Netzwerke, Anlagen oder Systeme kann es vorteilhaft sein, wenn wenigstens ein Teil der Anzahl der aktiven Komponenten der Schaltfunktionseinheit in einer Umgebung der Schaltfunktionseinheit verteilt angeordnet und durch zumindest gemeinsame Leistungsversorgungsleitungen zu der Schaltfunktionseinheit vereint ist. Für die Funktionsweise der vorgeschlagenen Lösung ist eine Unterbringung der einzelnen Komponenten in einem einzigen Gehäuse nicht zwingend erforderlich.

Ein besonderer Vorteil der Anordnung für eine Schaltfunktionseinheit besteht darin, dass mittels der aktiven Komponenten der Schaltfunktionseinheit jeweils zumindest ein Ethernet-Endgerät mit Power over Ethernet versorgbar ist, wobei die aktiven Komponenten Power over Ethernet für das zumindest eine Endgerät in einem Normalbetrieb aus der lokalen Leistungsversorgung beziehen, und in einem Fehlerfall der lokalen Leistungsversorgung Power over Ethernet für das zumindest eine Endgerät aus wenigstens einer der ersten und zweiten Fremdleistungsversorgung über Ethernet beziehen.

Somit ist auch für den Fehlerfall die Leistungsversorgung eines Endgeräts unmittelbar gesichert, und braucht auch dann keinerlei weitere Maßnahme oder Aufwand für das Endgerät vorgesehen zu werden.

Ein weiterer besonderer Vorteil der Anordnung für eine Schaltfunktionseinheit besteht darin, dass jede der aktiven Komponenten der Schaltfunktionseinheit eine von der einer jeweils anderen aktiven Komponente unabhängige Leistungsversorgung für Power over Ethernet aufweist, welche Leistungsversorgungen eine wechselseitige und bidirektionale Fremdleistungsversorgung der Schaltfunktionseinheit nach außen für benachbarte Schaltfunktionseinheiten ausbilden; und in einem Fehlerfall der lokalen Leistungsversorgung zumindest einer benachbarten Schaltfunktionseinheit die Schaltfunktionseinheit die zumindest eine benachbarte Schaltfunktionseinheit mittels Power over Ethernet versorgt.

In anderen Worten ist vorteilhaft eine Schaltfunktionseinheit gleichzeitig sowohl möglicher Fremdleistungsempfänger (für den Fehlerfall am eigenen Ort), als auch Fremdleistungsgeber (für den Fehlerfall andernorts), indem die aktiven Komponenten der Einheit, zumindest diejenigen mit einer Switch- oder Schaltfunktion, Leistung aus der eigenen lokalen Leistungsversorgung über Power over Ethernet erforderlichenfalls anderen Schalteinheiten zur Verfügung stellen. Bevorzugt sind somit die aktiven Komponenten jeweils aktive Ethernet-Switch-Komponenten mit Schaltfunktion.

Vorteile ergeben sich insbesondere dann, wenn das Ethernet eine Linientopologie, eine zumindest teilweise Einfachringtopologie oder eine zumindest teilweise Doppelringtopologie aufweist; und zumindest ein Ethernet-Endgerät in Sterntopologie an zumindest eine der aktiven Komponenten, die als aktiver Switch ausgebildet ist, anschließbar und/oder über diese durch Power over Ethernet versorgbar ist. Aufgrund breit gefächerter Anwendbarkeit und Freiheitsgraden hinsichtlich der Netzwerktopologie und Anschlussmöglichkeiten ist die vorgeschlagene Lösung vorteilhaft nicht nur in Fahrzeugverbänden nahezu beliebiger Länge und beliebiger Zahl von Einheiten, sondern auch in räumlich weit verteilten, fest installierten Netzwerken mit hohen Verfügbarkeitsanforderungen einsetzbar.
Beispielsweise können die Anordnungen für Schalteinheiten in Modulbauweise ausgeführt und beispielsweise zu Absicherungszwecken, Erweiterungszwecken und/oder Zwecken der Nachrüstung strategisch und/oder in vorbestimmten Abständen mit jeweils eigener lokaler Leistungsversorgung angeordnet werden.
In solchen Fällen kann vorteilhaft ein Echtzeit-Ethernet mit einer Vielzahl von Anordnungen bzw. Modulen für eine Schaltfunktionseinheit aufgebaut werden, wobei die Schaltfunktionseinheiten in dem Ethernet derart aufeinanderfolgend angeordnet sind, dass ein Fehlerfall der lokalen Leistungsversorgungen von wenigstens zwei zueinander benachbarten Schaltfunktionseinheiten durch Power over Ethernet von zu diesen wiederum benachbarten Schaltfunktionseinheiten, deren lokale Leistungsversorgungen fehlerfrei bzw. störungsfrei arbeiten, überbrückbar ist.

Diese Aufgabe wird durch die in den unabhängigen Patentansprüchen definierten Gegenstände gelöst. Es zeigen:
Fig. 1 eine vereinfachte Darstellung eines beispielsweisen Fahrzeugverbunds, beispielsweise eines Schienenfahrzeugzugs, mit einer Netzwerkstruktur einer Kabellänge L;
Fig. 2 eine vereinfachte Darstellung einer Anwendung von Ethernet in einem Fahrzeugverbund nach Fig. 1;
Fig. 3 eine vereinfachte Prinzipdarstellung einer Anordnung und Leistungsversorgung einer Schaltfunktionseinheit in einer Ethernet-Topologie gemäß einem Ausführungsbeispiel; und
Fig. 4 eine vereinfachte Darstellung zur Erläuterung eines Fehlerverhaltens in einem Fahrzeugverbund mit einer Ethernet-Topologie und darin angeordneten Schaltfunktionseinheiten gemäß dem Ausführungsbeispiel.

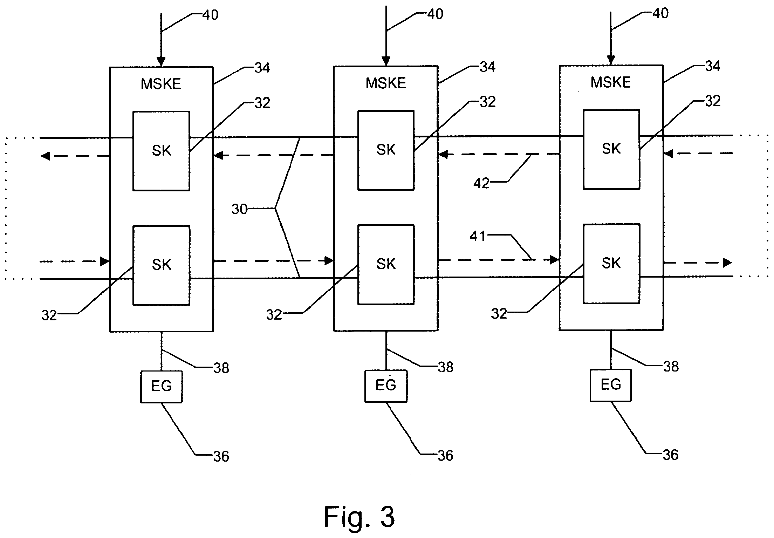

Fig. 3 zeigt eine vereinfachte Prinzipdarstellung einer Anordnung und Leistungsversorgung einer Schaltfunktionseinheit in einer Ethernet-Topologie gemäß einem Ausführungsbeispiel. Die Ethernet-Topologie kann dazu als beispielsweise Linien- oder Ringtopologie ausgeführt sein.

In Fig. 3 ist ein Ausschnitt einer durch einen Fahrzeugverbund, beispielsweise einen Schienenfahrzeugverbund oder Zug bzw. Consist, verlaufenden Ethernet-Verkabelung 30 gezeigt. Die Ethernet-Verkabelung 30 ist in diesem Ausführungsbeispiel Teil der durch den Schienenfahrzeugverbund verlaufenden Ethernet-Topologie. Durch einen Wagen des Fahrzeugverbunds verlaufen jeweils zwei Kabelstränge des Ethernets. Grundsätzlich ist nicht nur eine Ringleitung, sondern auch jede andere, zumindest abschnittsweise parallel verlaufende Anordnung zumindest zweier Kabelstränge einer Netzwerktopologie denkbar.

Entlang der und in der Ethernet-Verkabelung 30 sind in vorbestimmten Abständen kleiner als 100 m (der maximalen Ethernet-Kabellänge ohne aktive Komponenten) jeweils aktive Komponenten (SK) 32, etwa in Form von Schalt- bzw. Switch-Komponenten, d.h. Komponenten mit einer Schaltfunktion, angeordnet.

Gemäß dem Ausführungsbeispiel einer Schaltfunktionseinheit sind darüber hinaus mehrere, im vorliegenden Ausführungsbeispiel zwei, der aktiven Komponenten 32 zu einer (Mehrfach-) Schaltfunktionseinheit (MSKE) 34 zusammengefasst.

Die Schaltfunktionseinheit 34 kann die in ihr zusammengefassten aktiven Komponenten 32 in einem einzigen Gehäuse beherbergen. Alternativ ist auch eine verteilte Anordnung auf mehrere Aufnahmen, beispielsweise in Gehäusen, Modulen oder anderweitigen Baugruppen, an unterschiedlichen Einbauorten oder Kabellängen möglich. Mitbestimmend ist hierbei die Art der Leistungsversorgung, auf die nachstehend näher eingegangen wird.

Die Art der zusammenfassbaren aktiven Komponenten 32 ist nicht weiter eingeschränkt, solange grundsätzliche Ethernet-Kompatibilität eingehalten wird. Beispielsweise sind aktive Komponenten 32 mit unterschiedlichen Anzahlen von Anschlüssen bzw. Ports für anschließbare Endgeräte und unterschiedliche Baugrößen und Bauformen möglich. Auch die Anzahl der zusammenfassbaren Komponenten 32 ist nicht auf zwei beschränkt.

Insgesamt unterliegt die vorgeschlagene Lösung keiner grundsätzlichen Beschränkung, solange alle inneren bzw. aktiven Komponenten 32 einer Schaltfunktionseinheit 34 aus zwei unterschiedlichen Richtungen mittels Power over Ethernet und zusätzlich mittels der lokalen Eigenleistungsversorgung versorgbar sind, und die Schaltfunktionseinheit 34 über wenigstens vier Ethernet-Ports verfügt, von welchen wenigstens zwei Power over Ethernet liefern können und wenigstens zwei mittels Power over Ethernet versorgbar sind.

Die aktiven Komponenten 32 können darüber hinaus auch unterschiedliche Parameter in Bezug auf ihre Leistungsversorgung aufweisen, sofern in der Schaltfunktionseinheit 34 geeignete Umsetzungs- und/oder Anpassungs-Einrichtungen zur bedarfsweisen Umsetzung oder Anpassung von Leistung, Strom und/oder Spannung für die einzelnen aktiven Komponenten 32 vorgesehen sind.

In Fig. 3 schematisch dargestellt, können jeweils wenigstens ein Ethernet-Endgerät (EG) 36 über ein Verbindungskabel 38 in beispielsweise Sterntopologie (andere Topologien sind möglich) mit den einzelnen Schaltfunktionseinheiten 34 verbunden sein. Es kann dazu vorgesehen sein, dass einzelne Anschlüsse bzw. Ports der aktiven Komponenten 32 einer Schaltfunktionseinheit 34 an einen Gehäuseabschnitt der Schaltfunktionseinheit 34 geführt und dort mit dem wenigstens einen Endgerät 36 verbindbar sind, oder dass jeweilige Verbindungskabel 38 durch eine Gehäusewand der Schaltfunktionseinheit 34 hindurch geführt und in dieser intern mit einem Anschluss der aktiven Komponenten 32 verbindbar sind. Bezüglich des Anschlusses von Endgeräten 36 an die aktiven Komponenten 32 bzw. die Schaltfunktionseinheiten 34 bestehen keine Einschränkungen, so dass die schematische Darstellung eines Endgeräts 36 an einer Schaltfunktionseinheit 34 in Fig. 2 stellvertretend genügen soll.

Jede Schaltfunktionseinheit 34 verfügt über wenigstens drei voneinander unabhängige Energie- bzw. Leistungsversorgungen (Spannung und/oder Strom) 40 bis 42.

Die Leistungsversorgung 40 ist hierbei eine lokale Versorgung oder Eigenleistungsversorgung direkt an der Schaltfunktionseinheit 34. Die Leistungsversorgung 40 liefert Betriebsleistung für die gesamte Schaltfunktionseinheit 34, und damit auch Betriebsleistung für alle der in ihr zusammengefassten aktiven Komponenten 32, aus beispielsweise einem über Oberleitungen und/oder einem Generator gespeisten Bordnetz, und kann darüber hinaus mittels einer Notversorgung, etwa einer Pufferbatterie oder Kondensatoranordnung zur kurzzeitigen Bordnetz-Ausfallüberbrückung, zusätzlich abgesichert sein. Die Leistungsversorgung 40 beliefert die Schaltfunktionseinheit 34 im störungsfreien Normalbetrieb und ist, anders als Power over Ethernet, lediglich durch die Leistungsfähigkeit des zugrunde liegenden Bordnetzes beschränkt.

Die Leistungsversorgungen 41, 42 sind Power over Ethernet-Versorgungen, welche innerhalb der Ethernet-Verkabelung unidirektional (angedeutet durch Pfeile) Betriebsleistung für andere Einrichtungen über die (Signal-) Leitungen des Ethernet liefern.

Gemäß dem Ausführungsbeispiel kann, wie in Fig. 3 gezeigt ist, jede Schaltfunktionseinheit 34 Leistung mittels Power over Ethernet von wenigstens einer benachbarten, beispielsweise im Verlauf des Ethernets angrenzenden, Schaltfunktionseinheit 34 empfangen und/oder Leistung mittels Power over Ethernet-Leistung an wenigstens eine andere benachbarte, beispielsweise im weiteren Verlauf des Ethernets angrenzende, Schaltfunktionseinheit 34 liefern. Da jede Schaltfunktionseinheit 34 eine eigene lokale Leistungsversorgung 40 besitzt, aus welcher auch die Leistung für die Power over Ethernet-Versorgungen 41, 42 entnommen wird, bildet jede Schaltfunktionseinheit 34 eine zusätzliche (nicht lokale, weil entfernt über die Ethernet-Verkabelung erfolgende) Leistungsversorgung für ihre jeweils beidseitig benachbarten Schaltfunktionseinheit 34. Obwohl Power over Ethernet für sich gesehen unidirektional versorgt, entsteht durch die Möglichkeit der Leistungszufuhr über Power over Ethernet von benachbarten Schaltfunktionseinheiten 34 eine wechselseitige, bidirektionale Versorgungsmöglichkeit einer Schaltfunktionseinheit 34 aus einer ersten Richtung und einer zweiten Richtung.

Wird beispielsweise der Ethernet-Leitung (die, angedeutet durch die punktierte Verbindungslinie in Fig. 2, eine Ringleitung sein kann) eine Umlaufrichtung gegeben, kann die in Fig. 2 mittig angeordnete Schaltfunktionseinheit 34 sowohl von ihrer lokalen Leistungsversorgung 40 als auch aus einer ersten Richtung (beispielsweise von rechts über einen ersten, oberen Ethernet-Leitungsabschnitt, d.h. von der in Fig. 2 rechtsseitigen Schaltfunktionseinheit 34) und aus einer zweiten Richtung (beispielsweise von links über einen zweiten, unteren Ethernet-Leitungsabschnitt, d.h. von der in Fig. 3 linksseitigen Schaltfunktionseinheit 34) versorgt werden. Diese Schaltungsanordnung ist gemäß dem Ausführungsbeispiel für jede der Schaltfunktionseinheit 34 vorgesehen, so dass sich das vorgeschlagene Leistungsversorgungsprinzip über die gesamte Ethernet-(Ring-) Leitung und, im Beispielfall eines Schienenfahrzeugverbunds oder Zugs, über den gesamten Schienenfahrzeugverbund hinweg fortsetzt.

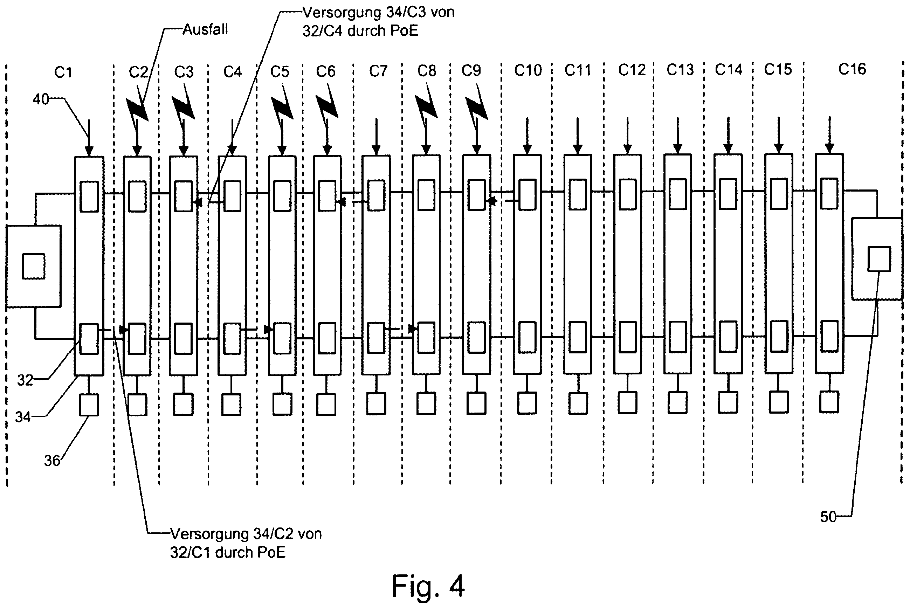

Fig. 4 zeigt eine vereinfachte Darstellung zur Erläuterung eines Fehlerverhaltens in einem Schienenfahrzeugverbund mit einer Ethernet-Ringtopologie und darin angeordneten Schaltfunktionseinheiten 34 gemäß dem Ausführungsbeispiel.

In Fig. 4 umfasst der Schienenfahrzeugverbund oder Consist beispielsweise 16 Wagen C1 bis C16. Jeder der Wagen C1 bis C16 beinhaltet wenigstens eine Schaltfunktionseinheit 34 wie in Fig. 3 dargestellt. Auf eine Wiederholung bereits mit Bezug auf Fig. 3 beschriebener Elemente und Bezugszeichen wird in Fig. 4 zu Zwecken besserer Übersichtlichkeit verzichtet.

Bei den Wagen C1 und C16 kann es sich um von einem Fahrzeugführer oder vermittels einer Fernsteuerung steuerbare Antriebsfahrzeuge, beispielsweise einen Triebwagen, eine Lokomotive oder allgemein eine Zugmaschine handeln, die zusätzlich zu der wenigstens einen Schaltfunktionseinheit 34 jeweils über wenigstens ein geeignet ausgelegtes Haupt- oder Netzwerksteuergerät 50 verfügen. Das bedarfsweise ausgelegte Netzwerksteuergerät 50 ist dazu vorgesehen, in vorbestimmter Weise das Ethernet des Schienenfahrzeugverbunds und die sich darin befindenden und mit ihm verbundenen Komponenten zu steuern und zu koordinieren. Der hier betrachtete Teil des Ethernets des Schienenfahrzeugverbunds stellt eine Ringleitung oder Ringtopologie dar, welche Redundanzeigenschaften aufweist und als Einzelringstruktur und/oder zumindest teilweise als Doppelringstruktur ausgeführt sein kann.

Die Wagen C2 bis C15 sind in diesem Ausführungsbeispiel gekoppelte Wagen mit, wie vorstehend erwähnt, jeweils wenigstens einer (Mehrfach-) Schaltfunktionseinheit 34, welche wiederum wenigstens zwei aktive Komponenten 32 mit Power over Ethernet-Fähigkeit, d. h. der Fähigkeit, an die aktive Komponente 32 angeschlossene Endgeräte 36 über (Signal-) Leitungen des Ethernet mit Leistung zu versorgen, beinhaltet. Die Wagen C2 bis C15 können dabei antriebslose oder angetriebene Wagen sein.

Jede aktive Komponente 32 ist an einem von Eingangsanschlüssen oder Eingangsports mit einer von einer ersten benachbarten aktiven Komponente 32 kommenden Ethernet-Leitung und an einem von Ausgangsanschlüssen oder Ausgangsports mit einer zu einer zweiten benachbarten aktiven Komponente 32 führenden Ethernet-Leitung verbunden. Außerdem weist jede aktive Komponente 32 eine Anzahl weiterer Ausgangsanschlüsse auf, mit welchen eine entsprechende Anzahl von Endgeräten 36 verbindbar und/oder gegebenenfalls über Power over Ethernet von der aktiven Komponente 32 mit Leistung versorgbar ist. Anschlussmöglichkeiten von und zu weiteren aktiven Komponenten 32 (im Sprachgebrauch auch als Uplink bezeichnet) können ebenfalls vorgesehen sein.

Jede Schaltfunktionseinheit 34 verfügt zudem über die anhand von Fig. 3 beschriebenen, wenigstens drei voneinander unabhängigen Leistungsversorgungen, die gleichzeitig allen aktiven Komponenten 32 innerhalb einer Schaltfunktionseinheit 34 zur Verfügung stehen.

Anhand Fig. 4 werden nachstehend einige mögliche Fehlerfälle für den beispielhaft betrachteten Schienenfahrzeugverbund erläutert.

Ein erster Fehlerfall kann beispielsweise eintreten, wenn in den Wagen C2 und C3 die lokale Leistungsversorgung 40 (angedeutet durch ein (blitzförmiges) Unterbrechungssymbol an der jeweiligen lokalen Leistungsversorgung 40) unterbrochen wird. Wie vorstehend erwähnt, kann eine solche Unterbrechung jederzeit beispielsweise durch einen Kabelbruch oder Kontaktstörungen im Bordnetz zwischen einzelnen Wagen oder durch eine mangelnde Stromabnahme von Oberleitungen eines einzelnen Wagens auftreten

Ohne weitere Maßnahmen sind in diesem Fall die beiden Wagen C2 und C3 des Schienenfahrzeugverbunds zumindest vorübergehend stromlos. Damit fallen auch die aktiven Komponenten 32 dieser Wagen C2 und C3 und alle daran angeschlossenen Endgeräte 36 aus, unabhängig davon, ob diese durch ebenfalls eine Eigenleistungsversorgung am Endgerät oder über Power over Ethernet von den aktiven Komponenten 32 dieser Wagen C2 und C3 versorgt werden. Außerdem ist in dem ersten Fehlerfall die Kommunikation über das Ethernet des Schienenfahrzeugs gestört, weil Datenpakete, Frames oder Token, unabhängig von ihrer Umlaufrichtung in der Netzwerktopologie, den jeweils auf der anderen Seite der Wagen C2 bzw. C3 liegenden Teil des Netzwerks nicht mehr erreichen können. In diesem Fall ist auch das Ethernet nicht mehr verfügbar.

Gemäß dem Ausführungsbeispiel wird ein solcher Fehlerfall dadurch vermieden, dass bei einem Ausfall der lokalen Leistungsversorgungen 40 der Wagen C2 und C3 die Leistungsversorgung der Schaltfunktionseinheit 34 des Wagens C2, und damit auch die Leistungsversorgung der darin enthaltenen aktiven Komponenten 32 und gegebenenfalls der daran angeschlossenen Endgeräte 36, von außerhalb des Wagens C2, d. h. von dem Wagen C1, durch Power over Ethernet über die Signalleitungen des Ethernet übernommen wird (angedeutet durch den von dem Wagen C1 zu dem Wagen C2 zeigenden Pfeil in Fig. 4), und die Leistungsversorgung der Schaltfunktionseinheit 34 des Wagens C3, und damit auch die Leistungsversorgung der darin enthaltenen aktiven Komponenten 32 und gegebenenfalls der daran angeschlossenen Endgeräte 36, von außerhalb des Wagens C3, d. h. von dem Wagen C4 durch Power over Ethernet über die Signalleitungen des Ethernet übernommen wird (angedeutet durch den von dem Wagen C4 zu dem Wagen C3 zeigenden Pfeil in Fig. 4).

Gemäß dem Ausführungsbeispiel kann somit die Unterbrechung der lokalen Leistungsversorgung 40 der Schaltfunktionseinheiten 34 zweier Wagen C2, C3 durch eine wechselseitige, bidirektionale Ersatzleistungsversorgung dieser Schaltfunktionseinheiten 34 aus benachbarten Wagen C1, C4 des Schienenfahrzeugverbunds über Power over Ethernet (41, 42 in Fig. 3) aufgelöst werden.

Diese Ersatzleistungsversorgung über die Signalleitungen des Ethernet kann ständig bereitgestellt werden, oder alternativ mittels beispielsweise einer geeigneten (nicht gezeigten) Eigenversorgungs-Überwachungseinrichtung und Power over Ethernet-Aufschalteinrichtung erst in einem tatsächlichen Fehlerfall automatisiert bzw. selbsttätig ausreichend schnell zu- bzw. aufgeschaltet werden.

Da somit im ersten Fehlerfall wenigstens die für das gesamte Ethernet des Schienenfahrzeugverbunds notwendigen Komponenten beider Wagen C2, C3 betriebsfähig gehalten werden, bleibt auch die Steuerung der an das Ethernet angeschlossenen Komponenten und Geräte weiterhin möglich, und werden die an den einzelnen aktiven Komponenten 32 angeschlossenen Endgeräte 36, beispielsweise Komponenten, Bremsen, Türen, einer Klimaanlage, WC-Einrichtungen, Oberleitungsstromabnehmern und dergleichen, versorgbar, reaktionsfähig und steuerbar gehalten.

Analog zu vorstehendem kann in einem zweiten Fehlerfall, in dem die lokale Leistungsversorgung 40 weiterer Wagen des Schienenfahrzeugverbunds, beispielsweise nicht nur die lokale Leistungsversorgung 40 der Wagen C2 und C3, sondern auch die lokale Leistungsversorgung 40 der Wagen C5 und C6 unterbrochen wird, die Funktionsfähigkeit des Ethernet gewährleistet werden.

In einer Modifikation kann auch vorgesehen sein, dass zunächst vorübergehend und übergangslos eine beispielsweise in jedem oder in einem Teil der Wagen C1 bis C16 vorgesehene Notfall-Energiespeichervorrichtung, wie etwa eine geeignet dimensionierte Pufferbatterie oder eine geeignet dimensionierte Kondensatoranordnung etwa in oder an der Schaltfunktionseinheit 34, diese Ersatzleistungsversorgung übergangslos übernimmt, und erst dann, wenn der Fehlerfall eine vorbestimmte Zeit andauert und/oder der Energievorrat der Notfall-Energiespeichervorrichtung zur Neige geht, die Ersatzleistungsversorgung mittels Power over Ethernet aus den benachbarten Wagen aufgeschaltet wird.

Gemäß dem Ausführungsbeispiel wird in anderen Worten eine Anordnung, ein Gerät und/oder eine Komponente verwirklicht, bei welchem bzw. welcher wenigstens vier Ethernet-Ports vorgesehen sind, wobei hiervon wenigstens zwei Ports Power over Ethernet speisen können und wenigstens zwei Ports Power over Ethernet empfangen können, und welche mehrere aktive Komponenten 32 mit Schaltfunktion in einem Gerät vereint bzw. operativ und funktional zusammenfasst. Bezüglich der Netzwerkfunktion sind die aktiven Komponenten 32 in dieser Anordnung, diesem Gerät bzw. dieser Komponente voneinander unabhängig. Die Anordnung, das Gerät bzw. die Komponente als Schaltfunktionseinheit 34 wird von drei voneinander unabhängigen Leistungsquellen 40, 41 und 42 versorgt, die örtlich und räumlich getrennt sind (sich beispielsweise in drei verschiedenen Wagen, d. h. dem eigenen Wagen und zwei anderen Wagen, und nicht notwendigerweise in unmittelbar benachbarten Wagen, aber innerhalb der maximal möglichen Segmentlänge von Ethernet, befinden). Die Leistungsversorgung 41, 42 von außerhalb des eigenen Wagens erfolgt über die Ethernet-Signalleitung. Hierdurch wird vorteilhaft eine erhebliche Verringerung des Verkabelungsaufwands und eine erhebliche Kostensenkung erzielt. Da aktive Komponenten 32 jeweils andere aktive Komponenten 32 mittels Power over Ethernet versorgen, wird eine wechselseitige, bidirektionale Versorgung durch Power over Ethernet realisiert. Dadurch, dass zwei aktive Komponenten 32 gemeinsam von einer Fremdleistungsversorgung über eine Signalleitung versorgt werden, wird vorteilhaft die Verfügbarkeit der Komponenten und der Kommunikation auf dem Ethernet erhöht.

Vorteilhaft wird somit gemäß dem Ausführungsbeispiel erreicht, dass ein zwei benachbarte Schaltfunktionseinheiten 34 betreffender, zweifacher Fehler (z.B. in C2, C3; C5, C6; C8, C9) noch keine Kommunikationseinschränkung auf dem Ethernet verursacht. Außerdem verursachen auch mehrfache zweifache Fehler noch keine Kommunikationseinschränkung, solange zwischen zwei zweifachen Fehlern (z.B. C2, C3 und C5, C6) wenigstens eine Fehlerfreiheit (C4) besteht.

Die Erfindung wurde anhand eines Schienenfahrzeugverbunds als Ausführungsbeispiel beschrieben. Sie ist jedoch nicht auf einen Schienenfahrzeugverbund beschränkt, insbesondere nicht auf einen solchen, in dem eine Schaltfunktionseinheit genau zwei aktive Komponenten zu einer Einheit zusammenfasst, sondern unmittelbar ersichtlich auf jede beliebige Ethernet-Linienstruktur anwendbar, und erzielt in Summe als Vorteile im Hinblick auf Netzwerkmerkmale, dass eine lange räumliche Ausdehnung bei gleichzeitig hoher Bandbreite und hoher Verfügbarkeit erzielt wird, eine gegenüber bekannten Topologien kostengünstige Realisierbarkeit gegeben ist, durch die redundante Leistungsversorgung über Signalleitungen ein reduzierter Verkabelungsaufwand erforderlich ist, und eine insgesamt minimale Anzahl von Netzwerkkomponenten benötigt wird.

Modifikationen, die zu der vorstehenden detaillierten Beschreibung der Erfindung ähnlich sind, erschließen sich dem Fachmann ohne weiteres und sind daher nicht als Abweichen vom Gegenstand der Erfindung und Verlassen deren Schutzumfangs, der allein durch die Patentansprüche bestimmt wird, zu werten.

## Patentansprüche

1. Anordnung für eine Schaltfunktionseinheit für Ethernet, **gekennzeichnet durch**:
zumindest zwei aktive Komponenten (32) des Ethernet, die mittels der Schaltfunktionseinheit (34) zu einer funktionellen Einheit zusammengefasst werden; und
zumindest drei voneinander unabhängige Leistungsversorgungen (40, 41, 42) zur Leistungsversorgung der aktiven Komponenten (32), wobei eine erste der zumindest drei Leistungsversorgungen (40, 41, 42) als eine lokale Leistungsversorgung (40) der Schaltfunktionseinheit (34) ausgebildet ist, eine zweite der zumindest drei Leistungsversorgungen (40, 41, 42) als eine erste Fremdleistungsversorgung über Ethernet (42) der Schaltfunktionseinheit (34) ausgebildet ist, die aus einer ersten, unidirektional in einer ersten Richtung versorgenden Ethernet-Leitung (30), mit der ein erster Teil der zumindest zwei aktiven Komponenten (32) verbunden ist, erfolgt, und eine dritte der zumindest drei Leistungsversorgungen als eine zweite Fremdleistungsversorgung über Ethernet (41) der Schaltfunktionseinheit (34), die aus einer zweiten, unidirektional in einer zweiten Richtung versorgenden Ethernet-Leitung (30), mit der ein zweiter Teil der zumindest zwei aktiven Komponenten (32) verbunden ist, erfolgt, ausgebildet ist.

2. Anordnung für eine Schaltfunktionseinheit nach Anspruch 1, **dadurch gekennzeichnet, dass** die Schaltfunktionseinheit (34) als Anschlüsse zumindest vier Ethernet-Ports aufweist, von welchen wenigstens zwei Power over Ethernet als die Fremdleistung nach außerhalb der Schaltfunktionseinheit (34) liefern können, und von welchen wenigstens zwei Power over Ethernet als die Fremdleistung von außerhalb der Schaltfunktionseinheit (34) empfangen können.

3. Anordnung für eine Schaltfunktionseinheit nach Anspruch 1 oder 2, **dadurch gekennzeichnet, dass** die Schaltfunktionseinheit (34) in einem Normalbetrieb von der lokalen Leistungsversorgung (40) mit Leistung versorgt wird, und in einem Fehlerfall der lokalen Leistungsversorgung (40) von zumindest einer der ersten und der zweiten Fremdleistungsversorgung mit Power over Ethernet (41, 42) versorgt wird.

4. Anordnung für eine Schaltfunktionseinheit nach einem der vorangehenden Ansprüche, **dadurch gekennzeichnet, dass**
die Schaltfunktionseinheit (34) über die erste Ethernet-Leitung von einer ersten aktiven Komponente (32) einer ersten benachbarten Schaltfunktionseinheit (34) mit Power over Ethernet versorgt wird;
die Schaltfunktionseinheit (34) über die zweite Ethernet-Leitung von einer zweiten aktiven Komponente (32) einer zweiten benachbarten Schaltfunktionseinheit (34) mit Power over Ethernet versorgt wird; und
die Leistungsversorgung durch die erste und zweite aktive Komponente (32) der benachbarten ersten und zweiten Schaltfunktionseinheit (34) für alle aktiven Komponenten (32) der Schaltfunktionseinheit (34) bereitgestellt wird.

5. Anordnung für eine Schaltfunktionseinheit nach einem der vorangehenden Ansprüche, **dadurch gekennzeichnet, dass** die erste und die zweite Fremdleistungsversorgung über Ethernet (41, 42) an der Schaltfunktionseinheit (34) eine wechselseitige, bidirektionale Leistungsversorgung der Schaltfunktionseinheit (34) mittels Power over Ethernet über Signalleitungen des Ethernet bilden.

6. Anordnung für eine Schaltfunktionseinheit nach einem der vorangehenden Ansprüche, **dadurch gekennzeichnet, dass** wenigstens ein Teil der Anzahl der aktiven Komponenten (32) der Schaltfunktionseinheit (34) in einem gemeinsamen Gehäuse der Schaltfunktionseinheit (34) aufgenommen ist.

7. Anordnung für eine Schaltfunktionseinheit nach einem der Ansprüche 1 bis 5, **dadurch gekennzeichnet, dass** wenigstens ein Teil der Anzahl der aktiven Komponenten (32) der Schaltfunktionseinheit (34) in einer Umgebung der Schaltfunktionseinheit (34) verteilt angeordnet und durch zumindest gemeinsame Leistungsversorgungsleitungen zu der Schaltfunktionseinheit (34) vereint ist.

8. Anordnung für eine Schaltfunktionseinheit nach einem der vorangehenden Ansprüche, **dadurch gekennzeichnet, dass** mittels der aktiven Komponenten (32) der Schaltfunktionseinheit (34) jeweils zumindest ein Ethernet-Endgerät (36) mit Power over Ethernet versorgbar ist, wobei die aktiven Komponenten (32) Power over Ethernet für das zumindest eine Endgerät (36) in einem Normalbetrieb aus der lokalen Leistungsversorgung (40) beziehen, und in einem Fehlerfall der lokalen Leistungsversorgung (40) Power over Ethernet für das zumindest eine Endgerät (36) aus wenigstens einer der ersten und zweiten Fremdleistungsversorgung über Ethernet (41, 42) beziehen.

9. Anordnung für eine Schaltfunktionseinheit nach einem der vorangehenden Ansprüche, **dadurch gekennzeichnet, dass**
jede der aktiven Komponenten (32) der Schaltfunktionseinheit (34) eine von der einer jeweils anderen aktiven Komponente unabhängige Leistungsversorgung für Power over Ethernet (41, 42) aufweist, welche Leistungsversorgungen eine wechselseitige und bidirektionale Fremdleistungsversorgung der Schaltfunktionseinheit (34) nach außen für benachbarte Schaltfunktionseinheiten ausbilden; und
in einem Fehlerfall der lokalen Leistungsversorgung (40) zumindest einer benachbarten Schaltfunktionseinheit die Schaltfunktionseinheit (34) die zumindest eine benachbarte Schaltfunktionseinheit mittels Power over Ethernet versorgt.

10. Anordnung für eine Schaltfunktionseinheit nach einem der vorangehenden Ansprüche, **dadurch gekennzeichnet, dass** die aktiven Komponenten (32) jeweils aktive Ethernet-Switch-Komponenten mit Schaltfunktion sind.

11. Anordnung für eine Schaltfunktionseinheit nach einem der vorangehenden Ansprüche, **dadurch gekennzeichnet, dass**
das Ethernet eine Linientopologie, eine zumindest teilweise Einfachringtopologie oder eine zumindest teilweise Doppelringtopologie aufweist; und
zumindest ein Ethernet-Endgerät (36) in Sterntopologie an zumindest eine der aktiven Komponenten (32), die als aktiver Switch ausgebildet ist, anschließbar und/oder über diese durch Power over Ethernet versorgbar ist.

12. Echtzeit-Ethernet-Netzwerk, **gekennzeichnet durch** eine Vielzahl von Anordnungen für eine Schaltfunktionseinheit (34) nach einem der Ansprüche 1 bis 9, wobei die Schaltfunktionseinheiten (34) in dem Ethernet derart aufeinanderfolgend angeordnet sind, dass ein Fehlerfall der lokalen Leistungsversorgungen (40) von wenigstens zwei zueinander benachbarten Schaltfunktionseinheiten (34) durch Power over Ethernet von zu diesen wiederum benachbarten Schaltfunktionseinheiten (34), deren lokale Leistungsversorgungen (40) fehlerfrei arbeiten, überbrückbar ist.

## Claims

1. An arrangement for a switching function unit for Ethernet **characterised by**: ,
at least two active components 32 of the Ethernet which are combined to form a functional unit by means of the switching function unit 34; and
at least three mutually independent power supplies 40, 41, 42 for supplying power to the active components 32, a first of the at least three power supplies 40, 41, 42 being designed as a local power supply 40 of the switching function unit 34, a second of the at least three power supplies 40, 41, 42 being designed as a first extraneous power supply over Ethernet 42 of the switching function unit 34 which is provided from a first unidirectional Ethernet cable 30 which supplies power in a first direction and to which is connected a first part of the at least two active components 32, and a third of the at least three power supplies being designed as a second extraneous power supply over Ethernet 41 of the switching function unit 34 which is provided from a second unidirectional Ethernet cable 30 which supplies power in a second direction and to which is connected a second part of the at least two active components 32.

2. An arrangement for a switching function unit according to claim 1, **characterised in that** the switching function unit 34 has as connections at least four Ethernet ports, at least two of which are able to supply power over Ethernet as the extraneous supply to outside the switching function unit 34, and at least two of which are able to receive power over Ethernet as the extraneous supply from outside the switching function unit 34.

3. An arrangement for a switching function unit according to claim 1 or 2, **characterised in that** the switching function unit 34 is supplied with power from the local power supply 40 during normal operation and by power over Ethernet 41, 42 from at least one of the first and second extraneous power supplies if the local power supply 40 fails.

4. An arrangement for a switching function unit according to any of the preceding claims, **characterised in that**
the switching function unit 34 is supplied with power over Ethernet by a first active component 32 of a first adjacent switching function unit 34 via the first Ethernet cable;
the switching function unit 34 is supplied with power over Ethernet by a second active component 32 of a second adjacent switching function unit 34 via a second Ethernet cable; and
the power supply for all active components 32 of the switching function unit 34 is provided by the first and second active components 32 of the adjacent first' and second switching function units 34.

5. An arrangement for a switching function unit according to any of the preceding claims, **characterised in that** the first and second extraneous power supplies over Ethernet 41, 42 to the switching function unit 34 form a reciprocal bidirectional power supply of the switching function unit 34 by means of power over Ethernet via signal cables of the Ethernet.

6. An arrangement for a switching function unit according to any of the preceding claims, **characterised in that** at least some of the active components 32 of the switching function unit 34 are accommodated in a common housing of the switching function unit 34.

7. An arrangement for a switching function unit according to any of claims 1 to 5, **characterised in that** at least some of the active components 32 of the switching function unit 34 are arranged in a distributed manner in a vicinity of the switching function unit 34 and are joined to the switching function unit 34 by at least common power supply cables.

8. An arrangement for a switching function unit according to any of the preceding claims, **characterised in that** at least one Ethernet terminal device 36 can be supplied with power over Ethernet by means of the active components 32 of the switching function unit 34, the active components 32 receiving power over Ethernet for the at least one terminal device 36 from the local power supply 40 during normal operation and receiving power over Ethernet for the least one terminal device 36 from at least one of the first and second extraneous power supplies via Ethernet 41, 42 if the local power supply 40 fails.

9. An arrangement for a switching function unit according to any of the preceding claims, **characterised in that**
each of the active components 32 of the switching function unit 34 has a power supply for power over Ethernet 41, 42 independent of each of the other active components, said power supplies forming a reciprocal and bidirectional extraneous power supply of the switching function unit 34 to the outside for adjacent switching function units; and
if the local power supply 40 of at least one adjacent switching function unit fails, the switching function unit 34 supplies the at least one adjacent switching function unit by means of power over Ethernet.

10. An arrangement for a switching function unit according to any of the preceding claims, **characterised in that** the active components 32 are each active Ethernet switch components with a switching function.

11. An arrangement for a switching function unit according to any of the preceding claims, **characterised in that**
the Ethernet has a line topology, an at least partially simple ring topology or an at least partially double ring topology; and
at least one Ethernet terminal device 36 can be connected in a star topology to at least one of the active components 32, which is designed as an active switch, and/or can be supplied via said component by power over Ethernet.

12. A real-time Ethernet network, **characterised by** a plurality of arrangements for a switching function unit 34 according to any of claims 1 to 9, in which the switching function units 34 are arranged successively in the Ethernet such a failure of the local power supplies 40 can be bridged by at least two switching function units 34 located adjacent to one another by power over Ethernet from switching function units 34 which are also adjacent to said former switching function units 34 whose local power supplies 40 are operating normally.

## Revendications

1. Système pour une unité à fonction de commutation pour l'Ethernet, **caractérisé par** :
au moins deux composants (32) actifs de l'Ethernet, qui, au moyen de l'unité (34) à fonction de commutation, sont rassemblés en une unité fonctionnelle; et
au moins trois alimentations (40, 41, 42) de puissance indépendantes les unes des autres pour alimenter en puissance les composants (32) actifs, une première des au moins trois alimentations (40, 41, 42) de puissance étant constituée sous la forme d'une alimentation (40) de puissance locale de l'unité (34) à fonction de commutation, une deuxième des au moins trois alimentations (40, 41, 42) de puissance étant constituée sous la forme d'une première alimentation de puissance extérieure par l'intermédiaire de l'Ethernet (42) de l'unité (34) à fonction de commutation, qui s'effectue à partir d'une première ligne (30) de l'Ethernet alimentant unidirectionnellement dans une première direction, avec laquelle est reliée une première partie des au moins deux composants (32) actifs et une troisième des au moins trois alimentations de puissance est constituée sous la forme d'une deuxième alimentation de puissance extérieure par l'intermédiaire de l'Ethernet (41) de l'unité (34) à fonction de commutation, qui s'effectue à partir d'une deuxième ligne (30) de l'Ethernet alimentant unidirectionnellement dans une deuxième direction, avec laquelle est reliée une deuxième partie des au moins deux composants (32) actifs.

2. Système pour une unité à fonction de commutation suivant la revendication 1, **caractérisé en ce que** l'unité (34) à fonction de commutation a, comme bornes, au moins quatre accès de l'Ethernet, dont au moins deux peuvent fournir de la puissance par l'intermédiaire de l'Ethernet sous la forme de puissance extérieure à l'extérieur de l'unité (34) à fonction de commutation et, dont au moins deux peuvent recevoir de la puissance par l'intermédiaire de l'Ethernet sous la forme de puissance extérieure de l'extérieur de l'unité (34) à fonction de commutation.

3. Système pour une unité à fonction de commutation suivant la revendication 1 ou 2, **caractérisé en ce que** l'unité (34) à fonction de commutation est alimentée en puissance en fonctionnement normal par l'alimentation (40) de puissance locale et, en cas de défaut de l'alimentation (40) de puissance locale, est alimentée en puissance par l'intermédiaire de l'Ethernet (41, 42) par au moins l'une de la première et de la deuxième alimentation de puissance extérieure.

4. Système pour une unité à fonction de commutation suivant l'une des revendications précédentes, **caractérisé en ce que**
l'unité (34) à fonction de commutation est alimentée en puissance par l'Ethernet par l'intermédiaire de la première ligne de l'Ethernet par un premier composant (32) actif d'une première unité (34) à fonction de commutation voisine;
l'unité (34) à fonction de commutation est alimentée en puissance par l'Ethernet par l'intermédiaire de la deuxième ligne de l'Ethernet par un deuxième composant (32) actif d'une deuxième unité (34) à fonction de commutation voisine; et
l'alimentation en puissance, par le premier et le deuxième composant (32) actif de la première et de la deuxième unité (34) à fonction de commutation voisine, est mise à disposition pour tous les composants (32) actifs de l'unité (34) à fonction de commutation.

5. Système pour une unité à fonction de commutation suivant l'une des revendications précédentes, **caractérisé en ce que** la première et la deuxième alimentations de puissance extérieures forment, par l'intermédiaire de l'Ethernet (41, 42) sur l'unité (34) à fonction de commutation, une alimentation de puissance bidirectionnelle réciproque de l'unité (34) à fonction de commutation, au moyen de puissance par l'Ethernet par des lignes de signal de l'Ethernet.

6. Système pour une unité à fonction de commutation suivant l'une des revendications précédentes, **caractérisé en ce qu'**au moins une partie du nombre des composants (32) actifs de l'unité (34) à fonction de commutation est logée dans un boîtier commun de l'unité (34) à fonction de commutation.

7. Système pour une unité à fonction de commutation suivant l'une des revendications 1 à 5, **caractérisé en ce qu'**au moins une partie du nombre des composants (32) actifs de l'unité (34) à fonction de commutation est répartie dans ce qui entoure l'unité (34) à fonction de commutation et est réunie par au moins des lignes communes d'alimentation en puissance en l'unité (34) à fonction de commutation.

8. Système pour une unité à fonction de commutation suivant l'une des revendications précédentes, **caractérisé en ce qu'**au moyen des composants (32) actifs de l'unité (34) à fonction de commutation, respectivement au moins un terminal (36) de l'Ethernet peut être alimenté en puissance par l'Ethernet, les composants (32) actifs fournissant de la puissance par l'Ethernet pour le au moins un terminal (36) dans un fonctionnement normal, à partir de l'alimentation (40) de puissance locale et, en cas de défaut, de l'alimentation (40) de puissance locale fournissant de la puissance par l'Ethernet pour le au moins un terminal (36), à partir d'au moins l'une des première et deuxième alimentations de puissance extérieures, par l'intermédiaire de l'Ethernet (41, 42).

9. Système pour une unité à fonction de commutation suivant l'une des revendications précédentes, **caractérisé en ce que**
chaque composant (32) actif de l'unité (34) à fonction de commutation a une alimentation en puissance indépendante de respectivement un autre composant actif pour fournir de la puissance par l'Ethernet (41, 42), lesquelles alimentations de puissance constituent une alimentation de puissance extérieure réciproque et bidirectionnelle de l'unité (34) à fonction de commutation vers l'extérieur pour des unités à fonction de commutation voisines; et
en cas de défaut de l'alimentation (40) en puissance locale, au moins une unité à fonction de commutation voisine de l'unité (34) à fonction de commutation alimente en puissance par l'Ethernet la au moins une unité à fonction de commutation voisine.

10. Système pour une unité à fonction de commutation suivant l'une des revendications précédentes, **caractérisé en ce que** les composants (32) actifs sont chacun des composants actifs Switch-Ethernet à fonction de commutation.

11. Système pour une unité à fonction de commutation suivant l'une des revendications précédentes, **caractérisé en ce que**
l'Ethernet a une topologie linéaire, une topologie au moins en partie annulaire simple ou une topologie au moins en partie annulaire double; et
au moins un terminal (36) de l'Ethernet en topologie étoile sur au moins l'un des composants (32) actifs, qui est constitué en Switch actif, peut être raccordé et/ou alimenté en puissance par l'Ethernet par celui-ci.

12. Réseau de l'Ethernet en temps réel, **caractérisé par** une pluralité de systèmes pour une unité (34) à fonction de commutation suivant l'une des revendications 1 à 9, les unités (34) à fonction de commutation de l'Ethernet étant disposées successivement de manière à ce qu'un défaut des alimentations (40) de puissance locales puissent être shunté par au moins deux unités (34) à fonction de commutation voisines, par de la puissance par l'Ethernet provenant à nouveau de ces unités (34) à fonction de commutation voisines, dont les alimentations (40) en puissance locales travaillent sans défaut.
